**Europäisches Patentamt**

**European Patent Office**

**Office européen des brevets**

(19)

(11) Numéro de publication: **0 041 900**

**A1**

(12) # DEMANDE DE BREVET EUROPEEN

(21) Numéro de dépôt: **81400912.2**

(22) Date de dépôt: **09.06.81**

(51) Int. Cl.³: **F 16 L 59/02**

(30) Priorité: **11.06.80 FR 8013364**

(43) Date de publication de la demande:
**16.12.81 Bulletin 81/50**

(84) Etats contractants désignés:
**AT BE CH DE GB IT LI LU NL SE**

(71) Demandeur: **SOCIETE FRANCAISE D'ISOLATION "SOFRADI"**
**La Rabotière**
**F-44800 Saint-Herblain(FR)**

(72) Inventeur: **Denion, Marcel**
**2, Avenue de la Chénaie**
**F-44220 Coueron(FR)**

(74) Mandataire: **Phélip, Bruno et al,**
**c/o Cabinet HARLé & LECHOPIEZ 21, rue de La Rochefoucauld**
**F-75009 Paris(FR)**

(54) Procédé d'isolation d'appareils, de tuyauteries et de robinetterie à partir d'éléments préfabriqués, moulés, démontables, avec pare-vapeur et ensemble formé par sa mise en oeuvre.

(57) L'invention concerne un procédé de fabrication d'éléments d'isolation.

Elle se rapporte à un procédé selon lequel des revêtements hémicylindriques rigides, par exemple de tôle métallique, sont placés contre les parois externes (3a,3b) d'un moule de forme circulaire, et une mousse de matière plastique est injectée entre ce revêtement supporté par la paroi du moule et une cloison interne (5m, 5f) délimitant un joint emboîtable. Après démoulage, la mousse est solidaire du revêtement, et les deux parties peuvent être emboîtées l'une dans l'autre.

Application à l'isolation d'appareils et d'éléments de tuyauterie ou de robinetterie d'installations frigorifiques ou calorifiques.

FIG 1

Procédé d'isolation d'appareils, de tuyauteries et de robinetterie à partir d'éléments préfabriqués, moulés, démontables, avec pare-vapeur et ensemble formé par sa mise en oeuvre.

La présente invention concerne les procédés de réalisation de l'isolation des appareils, des réseaux de tuyauterie et de leurs accessoires, tels que vannes, robinets et tubulures entrant dans la composition d'installations ou utilisant de l'énergie calorifique ou frigorifique.

Dans le domaine de l'isolation, on sait que le choix du matériau isolant et la détermination de son épaisseur sont fonction de la température de régime du fluide, du caractère soit continu, soit discontinu du fonctionnement de l'installation ; d'autre part, il doit être tenu compte dans certains cas de la nécessité d'effectuer des contrôles fréquents sur certains organes pouvant entraîner des démontages. L'une des méthodes actuellement utilisées consiste à employer des coquilles découpées dans un matériau isolant et collées selon un mode de pose à joints croisés en une ou plusieurs couches avec adjonction d'un dispositif ou d'un matériau pare-vapeur, l'ensemble étant éventuellement protégé par une tôle. C'est ainsi qu'en installations frigorifiques, il peut être fait usage de mousses rigides dans lesquelles sont extraites les coquilles ; celles-ci, une fois montées et assemblées, sont revêtues d'un pare-vapeur bitumineux armé d'une toile de verre et protégé éventuellement par une tôle. Cette méthode demande un temps de réalisation très long avec l'aide d'une main d'oeuvre très importante sur le site de montage déterminant un prix de revient très élevé.

Une autre méthode actuellement utilisée et plus particulièrement dans le domaine frigorifique consiste dans l'injection "in situ" de mousse polyuréthanne sous enveloppe tôle. Cette pratique effectuée sur le lieu du montage ne permet pas d'atteindre la qualité d'expansion souhaitée de la mousse en raison même de l'impossibilité d'avoir une température ambiante de 20°C, notamment en période froide ; d'autre part, le contrôle de l'expansion de la mousse est difficile ; par ailleurs, la mise en service de l'installation généralement peu de temps après la finition des travaux d'isolation ne permet pas à la mousse d'atteindre une stabilisation parfaite. Enfin, la robinetterie et les brides de liaison ne sont pas démontables : en cas de démontage de celles-ci, l'isolation ne peut être réutilisée.

Le brevet britannique n° 877 253 décrit des éléments d'isolation formés par deux demi-coquilles de mousse auxquelles un revêtement flexible est collé. Ce revêtement est mis en place lorsque les demi-coquilles de mousse ont déjà été formées. La solidarisation des demi-coquilles et du revêtement nécessite une opération spéciale de collage. En outre, le revêtement qui est souple n'assure qu'une protection mécanique modérée.

Le brevet français n° 1 334 905 décrit des éléments d'isolation formés d'une mousse armée, à l'intérieur d'un moule. Les éléments formés n'ont aucun revêtement protecteur et sont donc fragiles.

Le procédé, suivant l'invention, permet de remédier à ces inconvénients. Sa mise en oeuvre permet en effet d'atteindre une industrialisation de la production par une préfabrication maximum en usine d'éléments d'isolation constitués d'une mousse expansée rendue solidaire d'un revêtement de protection garantissant une barrière pare-vapeur efficace et une bonne résistance mécanique, lesquels éléments facilement démontables peuvent être réemployés sans altérer leur qualité isolante, cette préfabrication permettant d'autre part de réduire et de simplifier la phase du montage sur le site d'éléments pour lesquels la stabilisation de la mousse les constituant est atteinte, la mise en service de l'installation pouvant ainsi s'effectuer dès la fin des travaux sans inconvénient. Un autre but de l'invention est de permettre l'obtention d'une mousse de très bonne qualité, ainsi que le contrôle de la densité et de la régularité d'expansion.

Plus précisément, l'invention concerne un procédé d'isolation d'appareils, d'éléments de tuyauteries ou de robinetterie, entrant dans la constitution d'installations produisant ou utilisant de l'énergie calorifique ou frigorifique, se caractérisant par le fait qu'il comprend une préfabrication et un assemblage. La préfabrication s'effectue par moulage en usine d'éléments d'isolation en deux parties adaptables auxdits appareils, éléments de tuyauterie ou de robinetterie, et emboîtables à joints déportés, chaque partie d'élément étant constituée d'une mousse de matière plastique de caractéristiques correspondant aux exigences des conditions d'utilisation de l'installation, et d'un revêtement de protection en tôle métallique ou en matière plastique destiné à former une barrière pare-vapeur efficace et ayant une bonne résistance mécanique, cette préfabrication comprenant

- la disposition, dans un moule, du revêtement rigide d'une première partie d'élément d'isolation,

- le moulage de la première partie par injection de mousse afin qu'elle subisse une expansion et se solidarise au revêtement correspondant,

- le démoulage de la première partie formée,

- la disposition, dans un moule, du revêtement rigide de la seconde partie de l'élément d'isolation,

- le moulage de la seconde partie par injection de mousse afin qu'elle subisse une expansion et se solidarise au revêtement correspondant, et

- le démoulage de la seconde partie formée. L'assemblage est réalisé par emboîtage à joints déportés, évitant toute déperdition calorifique ou frigorifique et assurant une bonne stabilité d'assemblage, chaque élément ainsi réalisé étant rendu démontable sans altérer sa qualité isolante.

Ainsi, le procédé, objet de l'invention, consiste à fabriquer les éléments d'isolation dans des moules métalliques conçus pour résister à l'expansion de la mousse et pour permettre le démoulage, l'injection de la mousse s'effectuant après mise en place dans le moule du revêtement de protection préalablement formé. Les formes du moule permettent l'obtention d'éléments feuillurés dans la zone des surfaces de liaison des assemblages circonférentiels et longitudinaux. La mousse injectée peut être une mousse de polyuréthanne de densité déterminée en fonction de l'utilisation ou une mousse phénolique ou toute autre mousse selon que les caractéristiques ce celle-ci répondent mieux aux exigences de l'installation. L'assemblage à joints croisés assure une bonne tenue mécanique de l'ensemble et évite les déperditions calorifiques ou frigorifiques, lequel assemblage est assorti de l'interposition d'un mastic spécial restant souple assurant ainsi une parfaite étanchéité à la vapeur d'eau, sa souplesse lui permettant d'autre part d'absorber les variations dimensionnelles.Ce mastic peut être remplacé par un joint en mousse souple lui permettant d'épouser la forme de la feuillure. Le revêtement de protection s'assemble par vis ou rivets, colliers et boucles, clips ou autres(cas d'une tôle d'acier ou d'aluminium) ou par collage ou soudage (cas d'une matière plastique).

Les dessins annexés illustrent, à titre d'exemple, quelques modes de réalisation d'éléments d'isolation en application du procédé conforme à la présente invention.Ceux-ci représentent :

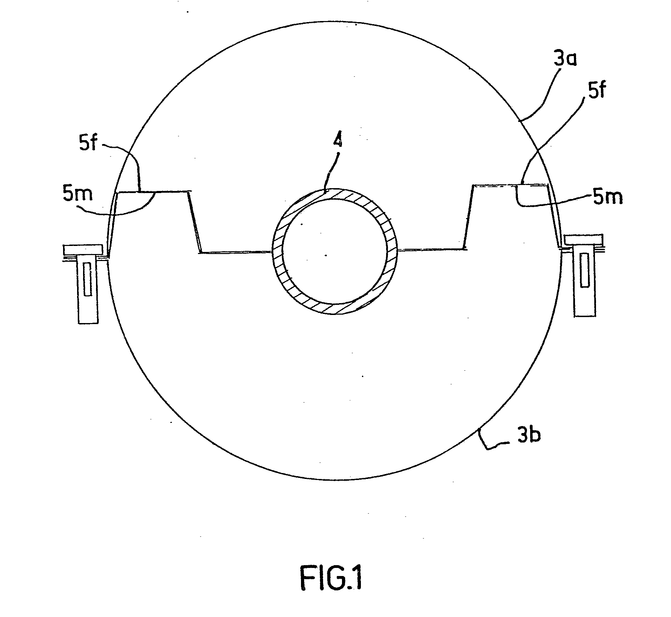

- en Figure 1, une coupe transversale d'un moule,

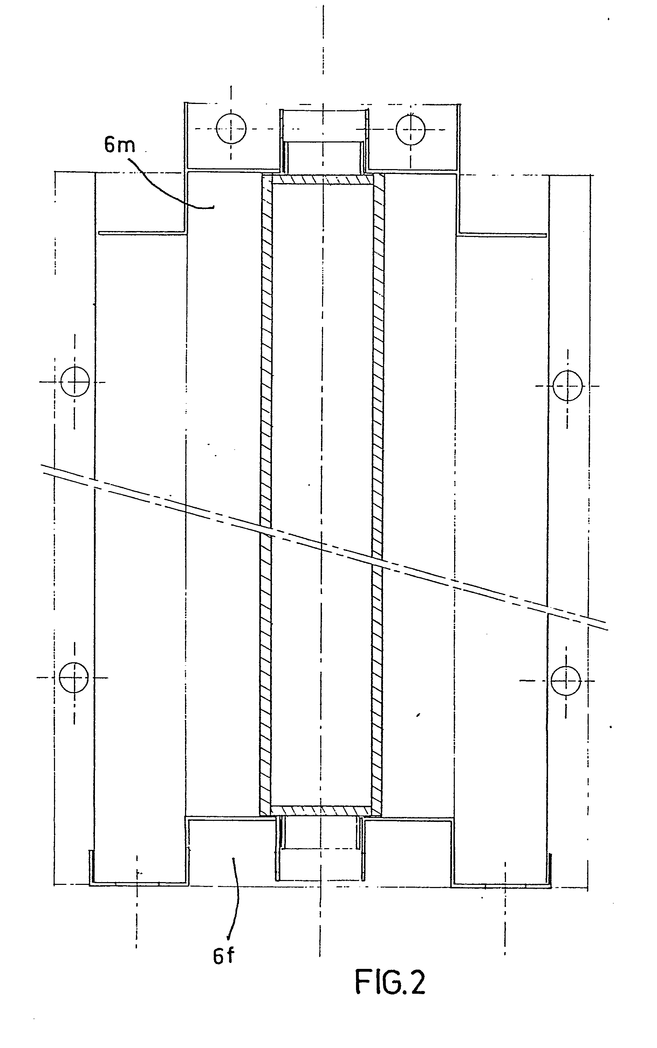

- en Figure 2, une coupe longitudinale de la partie inférieure du moule,

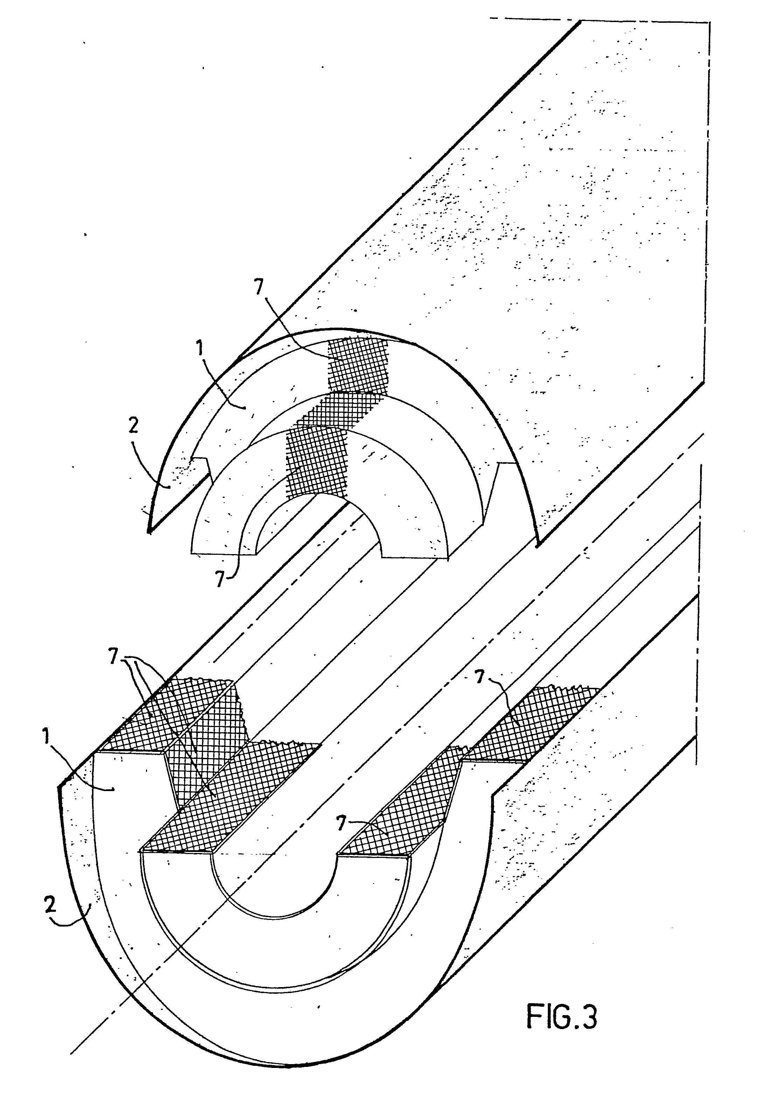

- en Figure 3, une vue en perspective d'éléments d'isolation destinés à une tuyauterie rectiligne.

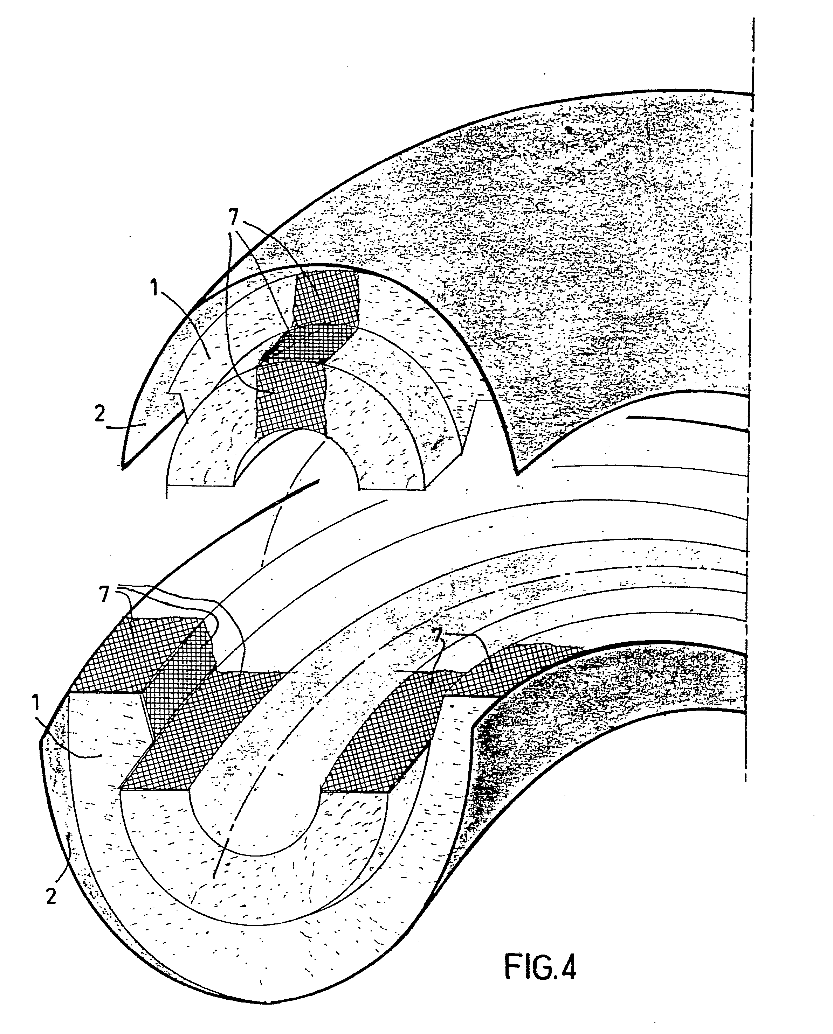

- en Figure 4, une vue en perspective d'éléments d'isolation destinés à un coude de tuyauterie.

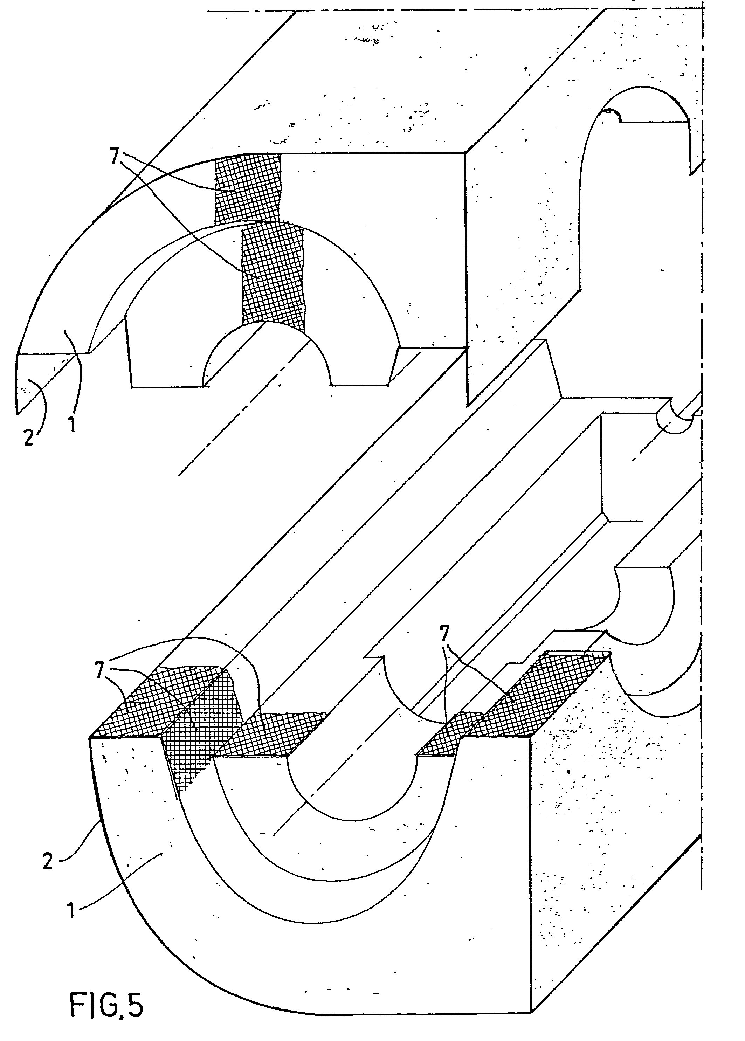

- en Figure 5, une vue en perspective d'éléments d'isolation destinés à une vanne.

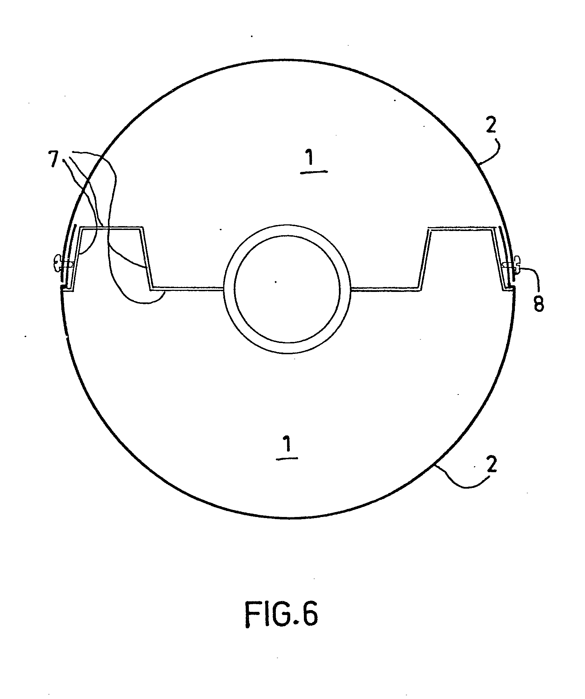

- en Figure 6, une coupe transversale d'éléments d'isolation assemblés.

Le procédé consiste à réaliser à l'aide de moules en deux parties s'assemblant selon un plan de symétrie, deux demi-coquilles composées d'une mousse isolante 1 dont l'injection et l'expansion dans le moule, après introduction dans ce dernier d'un revêtement de protection 2 préalablement formé, la rendent solidaire de celui-ci, le complexe ainsi réalisé garantissant une barrière pare-vapeur efficace et une bonne résistance mécanique. La mousse peut être une mousse de polyuréthanne de densité égale à 0,04 par exemple, elle peut être également en mousse phénolique ou toute autre mousse dont les caractéristiques répondent aux exigences des conditions d'utilisation. Afin d'éviter toutes déperditions calorifiques ou frigorifiques se produisant habituellement dans les plans de joints directs, et afin d'assurer une meilleure stabilité d'assemblage des éléments d'isolation entre eux, les moules comportent dans le plan de joint passant par le plan de symétrie de l'élément de robinetterie, des parties mâles et des parties femelles, ainsi que des parties épaulées constituant au moment de l'assemblage des chicanes formant obstacle auxdites déperditions, constituant par ailleurs des moyens de positionnement et de centrage des éléments les uns par rapport aux autres, tant sur le plan diamétral que sur le plan longitudinal. La figure 1 représente une coupe transversale d'un moule 3, les deux demi-parties 3a et 3b le constituant étant en position assemblée ; le moule comporte en sa partie centrale un noyau 4 de diamètre extérieur correspondant au diamètre de la pièce à isoler. Le plan jointif théorique des parties 3a et 3b passant par le plan diamétral du noyau comporte, disposées symétriquement par rapport à ce noyau, des feuillures mâles 5m et femelles 5f formant à l'assemblage des chicanes évitant toute déperdition calorifique ou frigorifique ; de même, en figure 2, il apparaît un déport du plan jointif d'extrémité déterminant dans la pièce moulée une extrémité mâle 6m et femelle 6f. Les figures 3, 4 et 5 illustrent selon les cas ces différents plans de jointoiement et d'assemblage. Les coquilles obtenues de démoulage sont disposées sur les éléments de l'installation à isoler et maintenues en position par collage au moyen d'un mastic spécial 7 enduit sur l'ensemble des surfaces de liaison, lequel mastic présente la particularité de rester souple assurant ainsi l'étanchéité à la vapeur d'eau, cette souplesse permettant d'absorber les variations dimensionnelles. A titre de variante, le mastic peut être remplacé par un joint de mousse souple épousant la forme de la feuillure et collé sur l'une des demi-coquilles. La figure 6 représente l'assemblage du revêtement de protection 2 dans le cas où ce dernier est réalisé à partir d'une tôle métallique : la liaison s'effectue soit par vis 8 ou par rivets, les bords de l'un des revêtements étant dévoyés à la valeur de l'épaisseur dudit revêtement afin d'obtenir un parfait cylindrage des éléments assemblés. Cet assemblage s'effectue par collage ou soudage dans le cas où le revêtement est réalisé en matière plastique. Toutes découpes exécutées dans l'isolation, nécessitées par la présence de piquage pour des prises de températures, de pression, ou de purges par exemple, sont étanchées à l'aide d'un mastic du type silicone.

L'invention n'est pas limitée aux modes de réalisation de ces différentes parties spécialement indiquées ; elle admet toutes les variantes possibles à condition que celles-ci ne soient pas en contradiction avec l'objet de chacune des revendications annexées à la présente description.

En fonction de l'aspect recherché, ou de l'agressivité de l'ambiance, l'enveloppe pourra être en tôle galvanisée ou laquée, en aluminium, en matière plastique ou en résine.

Le complexe mousse isolante et tôle a pour autre avantage d'assurer une isolation acoustique des bruits transmis par la tuyauterie.

Le procédé, objet de l'invention, peut être utilisé pour réaliser l'isolation de tous types d'installation, tels que les circuits frigorifiques, circuits d'eau chaude, ainsi que la protection des circuits d'eau contre les risques de gel ; d'une façon générale, l'invention peut s'appliquer à l'isolation de toutes tuyauteries, robinetteries ou appareils traitant de fluides.

REVENDICATIONS

1.　　　Procédé d'isolation d'appareils, d'éléments de tuyauterie ou de robinetterie, entrant dans la constitution d'installations produisant ou utilisant de l'énergie calorifique ou frigorifique, caractérisé en ce qu'il comprend

　　　　　- la préfabrication par moulage en usine d'éléments d'isolation en deux parties adaptables auxdits appareils, éléments de tuyauterie ou de robinetterie et emboîtables à joints déportés, chaque partie d'élément étant constituée d'une mousse de matière plastique de caractéristiques correspondant aux exigences des conditions d'utilisation de l'installation, et d'un revêtement de protection en tôle métallique ou en matière plastique, destiné à former une barrière pare-vapeur efficace et ayant une bonne résistance mécanique, ladite préfabrication comprenant

　　　　　- la disposition dans un moule du revêtement rigide d'une première partie d'élément d'isolation,

　　　　　- le moulage de la première partie par injection de mousse afin qu'elle subisse une expansion et se solidarise au revêtement correspondant,

　　　　　- le démoulage de la première partie moulée,

　　　　　- la disposition dans un moule du revêtement rigide de la seconde partie de l'élément d'isolation,

　　　　　- le moulage de la seconde partie par injection de mousse afin qu'elle subisse une expansion et se solidarise au revêtement correspondant, et

　　　　　- le démoulage de la seconde partie formée, et

　　　　　- l'assemblage des deux parties par emboîtage à joints déportés, évitant toute déperdition calorifique ou frigorifique et assurant une bonne stabilité d'assemblage, chaque élément ainsi réalisé étant rendu démontable sans altérer sa qualité isolante.

2.　　　Procédé d'isolation selon la revendication 1, caractérisé par le fait que le moulage s'effectue à l'aide d'un moule en deux parties conçu pour résister à l'expansion de la mousse isolante injectée et permettre le démoulage, les deux parties du moule s'assemblant selon un plan jointif comportant des parties mâles et des parties femelles formant feuillures, ainsi que des parties épaulées constituant au démoulage des moyens de positionnement et de centrage des parties constitutives de chaque élément d'isolation, ainsi que des moyens d'assemblage des éléments entre eux.

3.      Procédé d'isolation selon l'une des revendications 1 et 2, caractérisé par le fait que les coquilles obtenues de démoulage sont disposées sur les éléments de l'installation à isoler et maintenues en position par collage au moyen d'un mastic restant souple assurant l'étanchéité à la vapeur d'eau, tout en absorbant les variations dimensionnelles de l'appareil, de la tuyauterie ou de la robinetterie sur lequel ou laquelle l'élément d'isolation est monté.

4.      Procédé d'isolation selon l'une quelconque des revendications précédentes, caractérisé par le fait que l'assemblage du revêtement de protection est assuré par vis ou rivets, ou par collage ou soudage selon que ledit revêtement de protection est réalisé par formage d'une tôle métallique ou d'une feuille de matière plastique.

5.      Procédé d'isolation selon l'une quelconque des revendications 1 à 3, caractérisé en ce que les deux parties sont moulées simultanément dans un même moule ayant deux cavités séparées par une plaque ayant le profil du joint d'emboîtage.

6.      Procédé selon l'une quelconque des revendications précédentes, caractérisé en ce que les cavités du moule sont délimitées dans le sens longitudinal par des plaques donnant aux extrémités des parties d'éléments d'isolation le profil d'un joint emboîtable pour la coopération de deux éléments juxtaposés d'isolation.

7.      Ensemble d'isolation d'installation calorifique ou frigorifique, caractérisé en ce qu'il est réalisé par mise en oeuvre du procédé selon l'une quelconque des revendications précédentes.

FIG.1

6m

6f

FIG.2

FIG.3

FIG.4

0041900

7

2   1

7
7

7

2
1

FIG.5

FIG.6

**0041900**

Numéro de la demande

Office européen
des brevets

**RAPPORT DE RECHERCHE EUROPEENNE**

EP 81 40 0912

| DOCUMENTS CONSIDERES COMME PERTINENTS | | Revendica-tion concernée | CLASSEMENT DE LA DEMANDE (Int. Cl.³) |
|---|---|---|---|
| Catégorie | Citation du document avec indication, en cas de besoin, des parties pertinentes | | |
| | GB - A - 877 253 (IMPERIAL CHE-MICAL) <br> * Page 1, lignes 15-87; page 2, lignes 18-23; figure unique * <br> -- | 1-4,7 | F 16 L 59/02 |
| | FR - A - 1 334 905 (KNOPKE) <br> * Ensemble du brevet; figures 1-4 * <br> -- | 1,2,4, 5,6,7 | |
| A | GB - A - 1 176 418 (ESSO RESEARCH) <br> * Revendications 1-3 * <br> ---- | 3 | DOMAINES TECHNIQUES RECHERCHES (Int. Cl.³) <br><br> F 16 L |

**CATEGORIE DES DOCUMENTS CITES**

X: particulièrement pertinent
A: arrière-plan technologique
O: divulgation non-écrite
P: document intercalaire
T: théorie ou principe à la base
   de l'invention
E: demande faisant interférence
D: document cité dans
   la demande
L: document cité pour d'autres
   raisons
&: membre de la même famille,
   document correspondant

Le présent rapport de recherche a été établi pour toutes les revendications

| Lieu de la recherche | Date d'achèvement de la recherche | Examinateur |
|---|---|---|
| La Haye | 15-09-1981 | ANGIUS |

OEB Form 1503.1   06.78